# EUROPÄISCHE PATENTANMELDUNG

(11) **EP 1 281 569 A1**
(43) Veröffentlichungstag der Anmeldung: **05.02.2003**
(21) Anmeldenummer: 01870168.0
(22) Anmeldetag: 30.07.2001
(51) Int. Cl.: B60P 3/00

(54) **Sicherungsanlage für Glasscheibentransporte**

(71) Anmelder: Faymonville, Alain, 4761 Rocherath 118 (BE); Faymonville, Yves, 4761 Rocherath 90 (BE)
(72) Erfinder: Faymonville, Alain, 4761 Rocherath 118 (BE); Faymonville, Yves, 4761 Rocherath 90 (BE)
(74) Vertreter: Van Malderen, Michel

(57) **Zusammenfassung**

Die vorliegende Erfindung betrifft eine Anlage zur Sicherung der aus Glasscheiben bestehenden Ladung (25) von Lastkraft-oder Eisenbahnwagen, bestehend aus ausfahrbaren, Sicherungstafeln (13,15) die durch einen Antrieb (10) aus ihrer Ruheposition in die Betriebsposition gefahren werden, **dadurch gekennzeichnet daß** sich die Andruckreichweite der Sicherungstafeln durch den Einsatz von zweifach gelenkverbundenen, mit Parallelführung(17) und Antrieb (12) ausgerüsteten Schwingarmen (14,16), um die Länge der Schwingarme erhöhen läßt.

## Beschreibung

### Inhalt der Erfindung

Die vorliegende Erfindung betrifft eine Anlage zur Sicherung von Glasscheibenladungen in Lastkraft-oder Eisenbahnwagen und insbesondere eine Sicherungsanlage mit vergrößerter Andruckreichweite für den Glastransport mit L-Gestellen.

### Stand der Technik und technologischer Hintergrund

Durch die vielseitige architektonische Entwicklung im Glasbau kommt es immer häufiger zu Mischtransporten bei denen Glasscheibenpakete von unterschiedlichen Dimensionen sicher transportiert werden müssen. Dazu werden sogenannte L-und A-Gestelle benutzt woran früher die Glasscheibenpakete gebunden wurden. Neuere Systeme arbeiten mit Moosgummi beschichteten Sicherunstafeln die vom Fahrzeug her an die Glaspakete angedrückt werden.

Aufgrund der Unterschiedlichen Abmessungen der zu transportierenden Glasstösse und der zum Einsatz kommenden A- und L-Gestelle ergeben sich eine Vielzahl von Sicherungspositionen für die einzelnen Sicherungstafeln. Bei den L-Gestellen, kommen vor allem die dem Gestell gegenüberliegenden und am weitesten entfernten Sicherungstafeln zum Einsatz.

Der Erfinder offenbarte bereits in der Patentanmeldung EP-A1-1084905 eine Ladungssicherungsanlage für Glasscheibenpakete bei der Sicherungstafeln, ausgehend von einer Ruheposition, mit einer Spindel in -die Betriebsposition gefahren werden. Diese Anlage sichert eine über die Höhe durchgehend gleiche Ladung, indem über einen Spindelantrieb, mehrere übereinander senkrecht oder waagerecht stehende Sicherungstafeln, gegen die zu transportierenden Glaspakete gefahren werden.

Die Sicherungstafeln legen sich nach einer horizontalen Verschiebung gleichmäßig an die mehr oder weniger senkrecht stehenden Glasscheiben an und sorgen auch während der Fahrt des Lastkraftwagens, oder des Eisenbahnwagens, für eine sichere Befestigung der Glasscheibenpakete. Dabei kann die Ladungssicherungsanlage sowohl bei L- wie auch bei den früher fast ausschließlich zum Einsatz kommenden A-Gestellen eingesetzt werden.

Diese Anlage bietet bereits eine Serie von Vorteilen verglichen mit dem, in der Patentanmeldung EP-A1-1084905 zitierten, Stand der Technik. Sie hat jedoch den Nachteil, vor allem bei L-Gestellen eine eingeschränkte und manchmal unzureichende Andruckreichweite der Sicherheitstafeln vorzuweisen. Besonders bei Transporten, bei denen teilweise dünne Glasscheibenpakete transportiert werden, verleitet dieser Nachteil oft dazu auf unzweckmäßige Befestigungsmethoden zurück zu greifen.

Weiterhin sollten die Glastransporter vielseitig sein, das heißt, sie sollten dazu in der Lage sein, sowohl große, laderaumausschöpfende, wie auch dünnere Glasscheibenpakete durch entsprechende Sicherungstafeln, ohne jegliche Einbußen in der Laderaumbreite, sicher zu transportieren. Für alle Glasabmessungen sollten somit die gleichen Fahrzeuge und insbesondere die gleichen Ladungssicherungsanlagen zum Einsatz kommen, sodass die Vielfalt der bis jetzt benötigten Fahrzeuge bzw. Sicherungssysteme entfällt. Der Erfindung liegt die Aufgabe zugrunde, das Problem der unzureichenden Andruckreichweite von Sicherungstafeln bei Glasscheibentransporten unter anderem mit L-Gestellen durch eine einfache, sichere und vor allem wirtschaftliche Vorrichtung elegant zu lösen.

Naheliegend wäre hierbei die Verlängerung der Sicherungstafeln, mit den entsprechenden Steuerungsarmen, gewesen. Aus Platzmangel hätte man dann jedoch die Anzahl der Sicherungstafeln von vier auf zwei pro Seite reduzieren müssen, dadurch hätte die Anlage dann wiederum an Vielseitigkeit für die oben genannten Mischtransporte verloren.

### Ziel der Erfindung

Der Erfindung liegt die Aufgabe zugrunde, eine Vorrichtung zur Verfügung zu stellen, die es erlaubt, die Andruckreichweite der sogenannten Sicherungstafeln bei Ladungssicherungsanlagen für Glasscheibentransporte zu erhöhen. Diese Ziel wurde erreicht ohne den Raumbedarf der Anlage zu vergrößern und ohne die zur Verfügung stehende Laderaumbreite einzuschränken. Aus sicherheitstechnischen Gründen sollten dabei die Sicherungstafeln von außen ansteuerbar sein damit das Betreten des Ladeinnenraums, was immer Gefahren mit sich bringt, vermieden werden kann.

### Zusammenfassung der Erfindung

Die Erfindung beschreibt eine Anlage zur Sicherung der aus Glasscheiben bestehenden Ladung von Lastkraft-oder Eisenbahnwagen, bestehend aus einer oder mehreren ausfahrbaren Sicherungstafeln (15) die durch einen Antrieb (10) aus ihrer Ruheposition in die Betriebsposition gefahren werden, dadurch gekennzeichnet daß sich die Andruckreichweite der Sicherungstafeln (15) durch den Einsatz von zweifach gelenkverbundenen, mit Parallelführung(17) und Antrieb (12), ausgerüsteten Schwingarmen (14,16) um die Länge der Schwingarme erhöhen läßt.

Ein zusätzliches Merkmahl dieser Erfindung besteht darin daß die Sicherungstafel aus zwei unterschiedlich großen und nebeneinander liegenden Teilen besteht (13,15), wobei der größere Teil der Sicherungstafel (15) anhand der angetriebenen Schwingarme (14,16) über den kleineren Teil der Sicherungstafel (13) hinaus gefahren werden kann.

Ein weiteres Kennzeichen der vorliegenden Erfindung ist die Erhöhung der Andruckreichweite der Sicherungstafeln so zu realisieren daß der Raumbedarf der Anlage im Ladeinnenraum nicht erhöht wird. Dadurch bleibt die gesamte Ladebreite bestehen.

Eine bevorzugte Ausführungsform der Erfindung besteht darin daß die gesamte Anlage elektrisch, hydraulisch oder pneumatisch betätigt wird und von außen ansteuerbar ist.

In einer weiteren bevorzugten Ausführungsform der Erfindung handelt es sich bei dem Antrieb (10) um einen Spindelantrieb.

Gemäß einer weiteren bevorzugten Ausführung der Erfindung kommt die Sicherungsanlage vor allem bei Transporten von dünnen Glaspaketen, und speziell bei Mischtransporten mit L-Gestellen zum Einsatz.

Die vorliegende Erfindung wird anhand der Beschreibung der nachfolgenden Abbildungen weiter erläutert.

### Kurze Beschreibung der Abbildungen

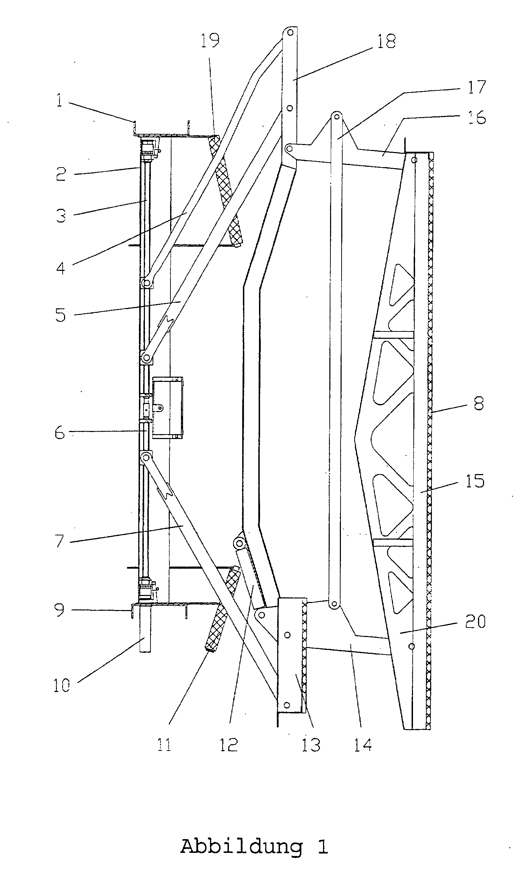

Abbildung 1 zeigt die Detailbeschreibung der einzelnen Elemente an der Sicherungsanlage mit ausgefahrenen Schwingarmen.

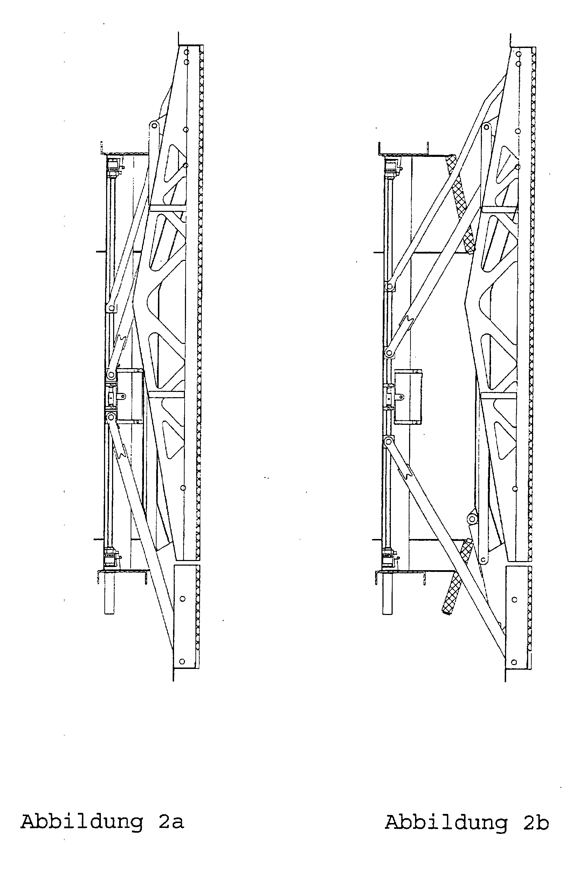

Abbildung 2a und 2b zeigt eine Draufsicht der Sicherungsanlage mit eingefahrenem Schwingarm in zwei verschiedenen Arbeitspositionen.

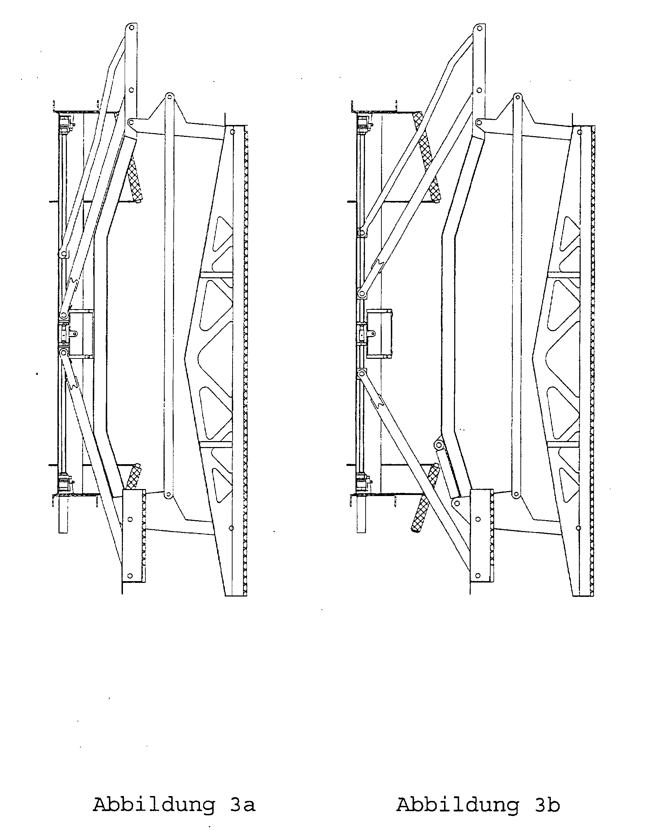

Abbildung 3a und 3b zeigt eine Draufsicht der Sicherungsanlage mit den ausgefahrenen Schwingarmen und mit zweifacher Gelenkverbindung in zwei verschiedenen Positionen.

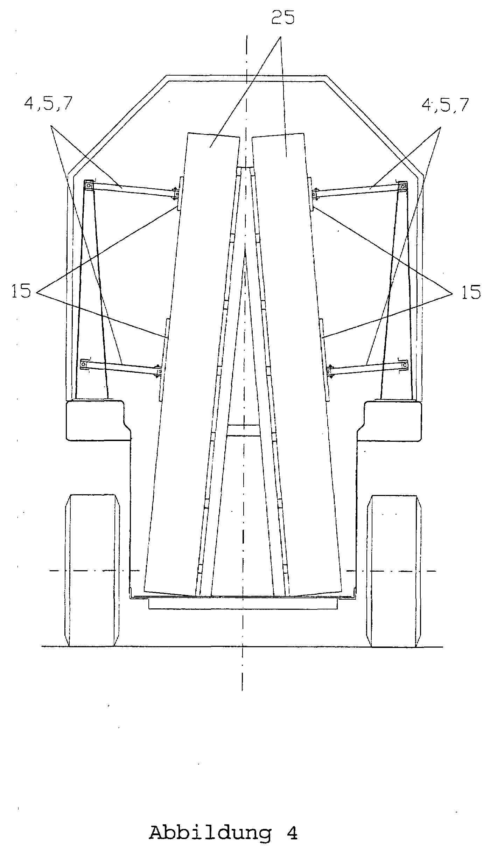

Abbildung 4 zeigt schematisch die Sicherungsposition von zwei Glaspaketen (25) auf einem klassischen A-Gestell bei dem die Schwingarme der Sicherungstafeln nicht zum Einsatz kommen.

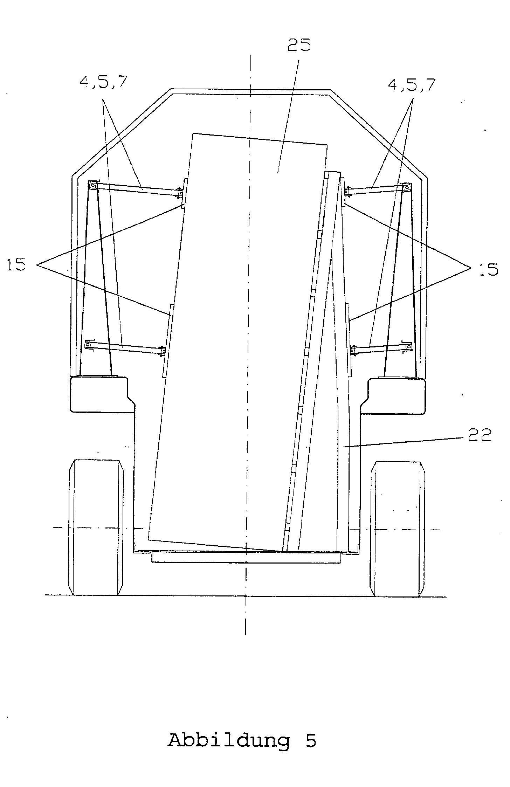

Abbildung 5 zeigt schematisch die Sicherungsposition von einem Glaspaket (25) auf einem L-Gestell bei der die Schwingarme der Sicherungstafel nicht zum Einsatz kommen.

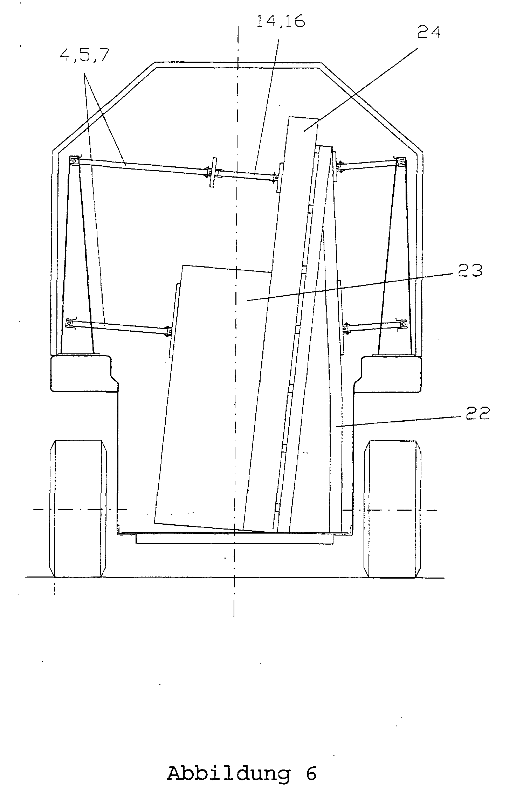

Abbildung 6 zeigt schematisch einen Mischtransport von zwei Glaspaketen (23,24) mit unterschiedlichen Dimensionen auf einem L-Gestell (22) bei der nur die oberen Schwingarme (14,16) der Sicherungstafeln zum Einsatz kommen.

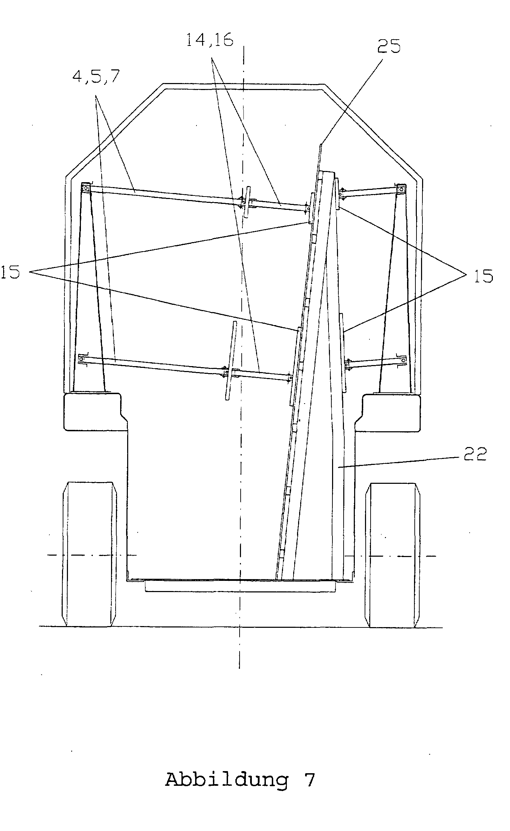

Abbildung 7 zeigt schematisch ein L-Gestell (22) mit einem Glaspaket (25) wobei alle Schwingarme (14,16) auf der linken Seite erfindungsgemäß zum Einsatz kommen.

Abbildung 8 zeigt schematisch eine Ladung (25) bei der die volle Ladebreite genutzt wird und wo der geringe Raumbedarf der Sicherungsanlage zur Geltung kommt.

### Detaillierte Beschreibung der Erfindung

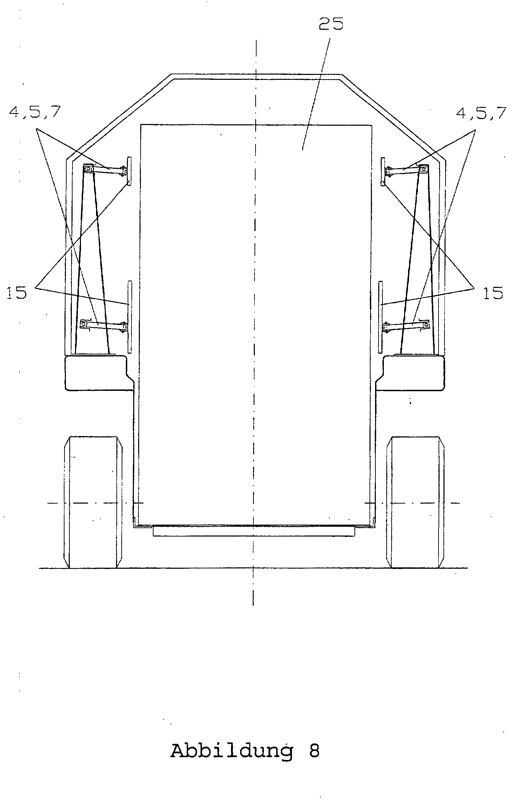

Die Vorliegende Erfindung betrifft eine Vorrichtung die es erlaubt die Andruckreichweite der aus zwei Teilen bestehenden Sicherungstafeln (13,15) bei Glastransporten zu erhöhen ohne den Raumbedarf der dazu notwendigen Arme (4,5,7) zu erhöhen und damit die zur Verfügung stehende Laderaumbreite (Abbildung 8) einzuschränken. Dabei geht es insbesondere darum, je Gestellseite zwei ausreichend dimensionierte, übereinander angeordnete, jeweils aus zwei Teilen bestehende und erweitert ausfahrbare Sicherungstafeln (13,15) vorzusehen, um so mit ein und derselben Glassicherungsanlage unterschiedliche Glaspaketbreiten (25) sicher transportieren zu können.

Die zum Einsatz kommenden, aus zwei Teilen bestehenden Sicherungstafeln (13,15), werden durch eine Spindel mit Rechts-bzw Linksgewinde (3,6) mit geringer Steigung durch den Spindelantrieb (10) mit wahlweiser Drehrichtung an die Glasscheibenpakete (25) herangefahren und angedrückt. Sollte dabei die Andruckreichweite für eine oder mehrere Sicherungstafeln, insbesondere bei L-Gestellen (22), unzureichend sein, können dabei erfindungsgemäße ausfahrbare Schwingarme (14,16)) zum Einsatz kommen.

Es handelt sich dabei um zwei ausfahrbare Schwingarme (14,16), mit je zweifacher Gelenkverbindung, einer Parallelführung (17) und einem Schwingarmantrieb (12), der die Andruckreichweite der aus zwei Teilen bestehenden, Sicherungstafeln (13,15) soweit vergrößert daß jegliche Sicherungseinschränkungen, beim Transport von dünnen Glaspaketen, insbesondere auf L-Gestellen, gegenstandslos werden. Dabei ist die aus zwei nebeneinander liegenden Teilen bestehende Sicherungstafel (13,15) mit mindestens drei Steuerungsarmen (4,5,7) gelenkig verbunden, wobei die Führungsprofile (2) über eine Gewindebohrung mit der Steuerspindel (3,6) verbunden sind. Die Steuerungsarme (4,5,7) werden von zwei Führungen (11,19) gestützt.

Sobald der Schwingarmantrieb (12) eingeschaltet wird, fahren die Schwingarme den größeren Teil, der aus zwei Teilen bestehenden Sicherungstafel (13,15), aus und erhöhen somit die Andruckreichweite erheblich.

Die Steuerungsarme (4,5,7) und die Spindeln (3,6) werden wahlweise entweder pneumatisch, elektrisch oder hydraulisch betätigt und von außen angesteuert sodass der Ladeinnenraum, unter anderem aus Sicherheitsgründen, nicht betreten werden muß.

Das Antriebssystem bietet eine große Funktionssicherheit, selbst bei niedrigen Steuerdrücken da die Spindeln sowohl in verspannter als auch in gelöster Position automatisch gegen lösen sichern.

## Patentansprüche

1. Anlage zur Sicherung der aus Glasscheiben bestehenden Ladung (25) von Lastkraft-oder Eisenbahnwagen, bestehend aus ausfahrbaren, Sicherungstafeln (13,15) die durch einen Antrieb (10) aus ihrer Ruheposition in die Betriebsposition gefahren werden, **dadurch gekennzeichnet daß** sich die Andruckreichweite der Sicherungstafeln durch den Einsatz von zweifach gelenkverbundenen, mit Parallelführung(17) und Antrieb (12) ausgerüsteten Schwingarmen (14,16) um die Länge der Schwingarme erhöhen läßt.

2. Anlage gemäß Anspruch 1, **dadurch gekennzeichnet daß** die Sicherungstafel aus zwei unterschiedlich großen und nebeneinander liegenden Teilen besteht (13,15), wobei der größere Teil der Sicherungstafel (15) anhand der angetriebenen Schwingarme (14,16) über den kleineren Teil der Sicherungstafel (13) hinaus gefahren werden kann.

3. Anlage gemäß Anspruch 1 und 2, **dadurch gekennzeichnet daß** die Erhöhung der Andruckreichweite der Sicherungstafeln so realisiert wird daß der Raumbedarf der Anlage im Ladeinnenraum nicht erhöht wird, und damit die gesamte Ladebreite bestehen bleibt.

4. Anlage gemäß irgendeinem der Ansprüche 1 bis 3, **dadurch gekennzeichnet daß** die gesamte Anlage elektrisch, hydraulisch oder pneumatisch betätigt wird und von außen ansteuerbar ist.

5. Anlage gemäß irgendeinem der Ansprüche 1 bis 4, **dadurch gekennzeichnet daß** sie vorzugsweise bei L-Gestellen (22) mit dünnen Glaspaketen zum Einsatz kommt.

6. Anlage gemäß irgendeinem der Ansprüche 1 bis 4, **dadurch gekennzeichnet daß** sie vorzugsweise bei Mischtransporten zum Einsatz kommt.

7. Anlage gemäß irgendeinem der Ansprüche 1 bis 4, **dadurch gekennzeichnet daß** der Antrieb (10) ein Spindelantrieb ist.

## Geänderte Patentansprüche

### Geänderte Patentansprüche gemäss Regel 86(2) EPÜ.

1. Anlage zur Sicherung der aus Glasscheiben bestehenden Ladung (25) von Lastkraft-oder Eisenbahnwagen, bestehend aus ausfahrbaren, Sicherungstafeln (13,15) die durch einen Antrieb (10) aus ihrer Ruheposition in die Betriebsposition gefahren werden, **dadurch gekennzeichnet daß** sich die Andruckreichweite der Sicherungstafeln durch den Einsatz von zweifach gelenkverbundenen, mit Parallelführung(17) und Antrieb (12) ausgerüsteten Schwingarmen (14,16) um die Länge der Schwingarme erhöhen läßt, und daß die Sicherungstafeln waagerecht angeordnet sind.

2. Anlage gemäß Anspruch 1, **dadurch gekennzeichnet daß** die Sicherungstafel aus zwei unterschiedlich großen und nebeneinander liegenden Teilen besteht (13,15), wobei der größere Teil der Sicherungstafel (15) anhand der angetriebenen Schwingarme (14,16) über den kleineren Teil der Sicherungstafel (13) hinaus gefahren werden kann.

3. Anlage gemäß Anspruch 1 und 2, **dadurch gekennzeichnet daß** die Erhöhung der Andruckreichweite der Sicherungstafeln so realisiert wird daß der Raumbedarf der Anlage im Ladeinnenraum nicht erhöht wird, und damit die gesamte Ladebreite bestehen bleibt.

4. Anlage gemäß irgendeinem der Ansprüche 1 bis 3, **dadurch gekennzeichnet daß** die gesamte Anlage elektrisch, hydraulisch oder pneumatisch betätigt wird und von außen ansteuerbar ist.

5. Anlage gemäß irgendeinem der Ansprüche 1 bis 4, **dadurch gekennzeichnet daß** sie vorzugsweise bei L-Gestellen (22) mit dünnen Glaspaketen zum Einsatz kommt.

6. Anlage gemäß irgendeinem der Ansprüche 1 bis 4, **dadurch gekennzeichnet daß** sie vorzugsweise bei Mischtransporten zum Einsatz kommt.
